# NEW EUROPEAN PATENT SPECIFICATION

(11) **EP 1 109 657 B2**
(45) Date of publication and mention of the opposition decision: **04.12.2013**
(45) Mention of the grant of the patent: 19.03.2003
(21) Application number: 99931022.0
(22) Date of filing: 02.07.1999
(51) Int. Cl.: B29C 33/76, B29L 22/00, B29D 22/00

(54) **METHOD FOR PRODUCING CLOSED COMPOSITE STRUCTURES AND MOULDING APPARATUS TO BE USED BY THE METHOD**
VERFAHREN ZUM HERSTELLEN GESCHLOSSENER STRUKTUREN AUS VERBUNDWERKSTOFF UND FORMGERÄT ZUR BENUTZUNG IN DIESEM VERFAHREN
PROCEDE DE PRODUCTION DE STRUCTURES COMPOSITES FERMEES ET APPAREIL DE MOULAGE METTANT EN OEUVRE LEDIT PROCEDE

(30) Priority: 03.07.1998 DK 87098
(43) Date of publication of application: 27.06.2001
(73) Proprietor: Siemens Aktiengesellschaft, 80333 München (DE)
(72) Inventor: STIESDAL, Henrik, DK-7330 Brande (DK)
(86) International application number: PCT/DK1999/000383
(87) International publication number: WO 2000/001520

(56) References cited:
- WO-A1-85/02365
- WO-A1-95/14563
- GB-A- 1 481 167
- US-A- 3 008 859
- US-A- 3 205 288
- DATABASE WPI Week 9509, Derwent Publications Ltd., London, GB; AN 1988-073801, XP002921025 & JP 63 027 215 A (TOYOTA JIDOSHA) 04 February 1988
- DATABASE WPI Week 9632, Derwent Publications Ltd., London, GB; AN 1996-317608, XP002921026 & JP 8 142 060 A (SUMINO KOGYO KK) 04 June 1996
- DATABASE WPI Week 9129, Derwent Publications Ltd., London, GB; AN 1991-211076, XP002921027 & JP 3 132 313 A (MITSUBISHI RAYON CO LTD) 05 June 1991
- DATABASE WPI Week 9637, Derwent Publications Ltd., London, GB; AN 1996-366460, XP002921028 & JP 8 174 152 A (NEMOTO T) 09 July 1996

## Description

### Background of the invention

The invention relates to a method for producing items of composite material, for example fibre reinforced material such as glass fibre reinforced epoxy or polyester, which items constitute partly closed structures containing cavities, which method comprises
a) - that the reinforcement material such as fibre and/or matrix material, which optionally may be pre-impregnated with moulding material, is placed around a mould core consisting of an outer part of a flexible material and an extractable filling material arranged inside the outer part,
b) - that the reinforcement material is moulded with the moulding material,
c) - that the composite material subsequently hardens or cures, and
d) - that the extractable filling material of the mould core subsequently is taken out through at least one opening in the flexible outer part of the mould core and further taken out through at least one opening in the item produced.

Different methods for making such items are known, which e.g. may be tanks, long pipes, wings for windmills and airfoils for aeroplanes.

Thus it is known that oblong, partly closed structures, e.g. carrier beams for windmill wings, glass fibre masts or the like may be produced by winding roving tape or roving bundles around a mandrel or core. Methods for this purpose are among others described in US patents 4,242,160 and 4,381,960.

Such winding methods have the disadvantage that the wound item after curing normally will appear with the raw composite material as the exterior surface, which is incompatible with many applications, as for example for windmill wings. Therefore, a satisfactory surface quality implies a subsequent treatment, e.g. by the gluing on of separately prepared shells.

Another disadvantage by this method is that the winding normally depends on use of a mandrel with a certain strength, which it is therefore desirable to reuse. In these cases the method can only be used by items, the geometry of which allowing the mandrel to be removed, which means that the dimensions of the internal cross section of the cavity at a given distance from the end into which the mandrel is pulled out must not exceed the dimensions of any of the intermediate cross sections from the place in question and out to the end, and in practice and normally requiring a certain slip in the mould. Such a method cannot thus be used for e.g. tanks or whole windmill wings.

US patent 3,988,103 mentions a method of winding cylindrical items, where the winding mandrel is provided with a longitudinal hinge, and where removal of a longitudinal part of the mandrel makes it possible to rotate the remaining parts of the mandrel partly against each other. Thereby, the mandrel may be pulled out, even though the item does not have a slip. However, the method mentioned can not be used on more complicated items as e.g. windmill wings.

Furthermore, methods are known where e.g. tanks made in composite material are wound about a hollow core which has been produced in a separate process. The core may be made in the same composite material as the item itself, or it may be made in another material. By this method the core remains in the item which may be a disadvantage. Furthermore, there is also the disadvantage that by this method the wound item will appear with the raw composite material as surface.

Alternatively, the core on which the fibre enforcement of the item is disposed, may be made so that it can expand later in the process. Thereby the fibre reinforcement may be brought into contact with and consolidated to an outer mould, whereby a good surface quality can be obtained.

Such a method is mentioned in US patent 5,137,071, where the inner mould is made in the thermoplastic material ABS, which is softened by high temperature. After placing the inner mould and the fibre reinforcement in the outer mould, the inner mould is heated and put under pressure whereby the fibre material is consolidated between the inner and outer mould. The process is mostly suited for so-called prepreg materials, that is fibre materials which are initially impregnated with partially cured matrix material and where the further curing process is initiated and finished under higher temperature. Also this method has the disadvantage that the inner mould stays in the item.

In a method for producing of a wing described in US patent 5,547,629, there is used an inner mould constituted by at least two resilient parts which substantially have a shape corresponding to the cavity in the completed item, but the dimensions of which are slightly greater than this cavity. The item laid up in a prepreg fibre material which is placed in an outer mould and kept in place by the parts of the inner mould which are slightly compressed when the outer mould is closed. After curing the parts of the inner mould are pulled out by taking advantage of the transverse contraction of the parts under longitudinal tension.

This method has also the disadvantage that pulling out in practise is only possible for an item where the dimensions of the internal cross section of the cavity at a given distance from the end of which the mandrel is pulled out, must not exceed the dimensions of any of the intermediate cross sections from the place in question and on to the end. When performing the method, it furthermore has the disadvantage that the outer mould must be closed against the pressure exerted at the compression of the parts of the inner mould, whereby it may be difficult to maintain the loosely laid, uncured material at the desired location.

Furthermore, there is known a method where e.g. windmill wings and airfoils for aeroplanes are made as shell constructions which are built up of shell elements of composite material. Thus a windmill wing built by this method is usually made of two shell halves which are joined at the front and back edges by glueing. Furthermore, the shell halves are normally supported inside the cavity of the wing by beams which are also joined with shell halves by glueing as the beams are produced in U- or I-shape, where flanges of these beams form abutment surface with the shell halves.

However, it is a problem by this method that it can be difficult to secure a satisfactory quality of the glue joints established in the inner of the structure for joining the shell halves mutually and for joining possible beams with the shell half. Firstly, this is caused by the glue joints being provided at the front and back edge and between beam and shell, thus establishing a glue joint on the unfinished surface of the inner side of the shell lamination.

The problem with this joint is that the glue surface is only defined within a certain greater range of tolerance. To that comes that for the part of the back and front edge glueing the shell lamination must be graduated towards the edge of the shells when, e.g. by windmill wings, speaking of shell halves, where the edges meet sloping towards each other, so that the glue joint can get a fairly uniform thickness. This graduation can not always be provided with the necessary tolerances, why an actual adaptation will need a working of the joining surfaces which again will lead to a large rise in expenses. Secondly, the deformations occurring in the wing shells in connection with the small variations in the process of production will result in a varying gap in the cavity of the item, so that it may be difficult to ensure a complete filling up with glue of the space between beam and shell. Finally, glue joints are usually difficult to control visually as they also are difficult to control by NDT-methods (non-destructive testing) because of the graduated lamination and the irregular geometry of the item.

Moreover, WO 85/02365 discloses a method for producing an item by a method mentioned by way of introduction. This process discloses the fabrication of a hollow box structure which could be obtained in one single operation of polymerization and being reinforced with slubs of fibres. The reinforcing material and the matrix material is placed around a mould core consisting of an outer part of a flexible material and a filling material inside the outer part after the composite material cures the filling material is taken out through an opening in the flexible outer part of the mould core and further taken out through an opening of the item produced.

However, this method has a limited possibility to choose the form of the items produced. Seeing that the filling material of the mould core is provided as a rigid, elongated, mandrel it may only be extracted from the item if the item is provided with a cavity having a tapering cross section along the length. Thus it is impossible to form items having cavities having cross sections which decrease in any part in direction of the opening used to withdraw said filling material.

### General description of the invention

The purpose of the invention is to provide a method for producing of partly closed items in composite materials, such as e.g. tanks, pipes, windmill wings and airfoils for aeroplanes where these can be produced substantially in one piece without glueing and without use of a mandrel or core that has to remain inside the item if it does not have a tapering cross section.

This is obtained by a method according to claim 1.

Thus, it is obtained that items constituting partly and even almost completely closed structures may be produced in substantially one piece by means of an extractable core, as the filling material of the moulding core after finishing is taken out through at least one opening in the item. These items can have any desired variation in cross section along the length as the small mouldable parts constituting the filling material may be extracted from any cavity of the item produced.

Furthermore, as mentioned in claim 2 the flexible outer part of the moulding core can also suitably be taken out through an opening in the item, after the filling material has been taken out.

In a suitable embodiment of the invention appearing in claim 3, an outer mould is additionally used for producing the item, so that the item may be given a more exact external surface. In this connection, as indicated in claim 4, the moulding core or cores, when several are used, may be adapted before the outer mould is dosed, by rearranging the filling material, in that templates or the like, for example, are used to determine the desired shape. The rearranging is only possible as the filling material of the mould core is mouldable.

Furthermore, as indicated in claim 5, an outer mould may be used having connection to vacuum and thus is intended for closed moulding processes such as vacuum injection or RTM (resin-transfer moulding), pre-preg etc. Hereby the flexible outer part of the moulding core, when after closing the outer mould there is supplied vacuum to this, will expand and consolidate the fibre and matrix material out toward the outer mould so that the finished item is perfectly adapted to the outer mould.

Moreover, the flexible outer part of the moulding core may be subjected to pressure after closing of the outer mould whereby the consolidation of the fibre and matrix material is further enhanced.

As indicated in claim 6 the flexible outer part of the moulding core may be made in plastic, rubber or the like.

In the following the invention will be explained further with reference to the drawings, where
- Fig. 1: shows a longitudinal section of the item produced by the method according to the invention,
- Fig. 2: shows a crosswise section of a mould for performing the method according to the invention,
- Fig. 3: shows a crosswise section of the mould with a first type of filling material, and
- Fig. 4: shows a crosswise section of mould with another type of filing material for performing of the method according to the invention.

### Detailed description of the invention

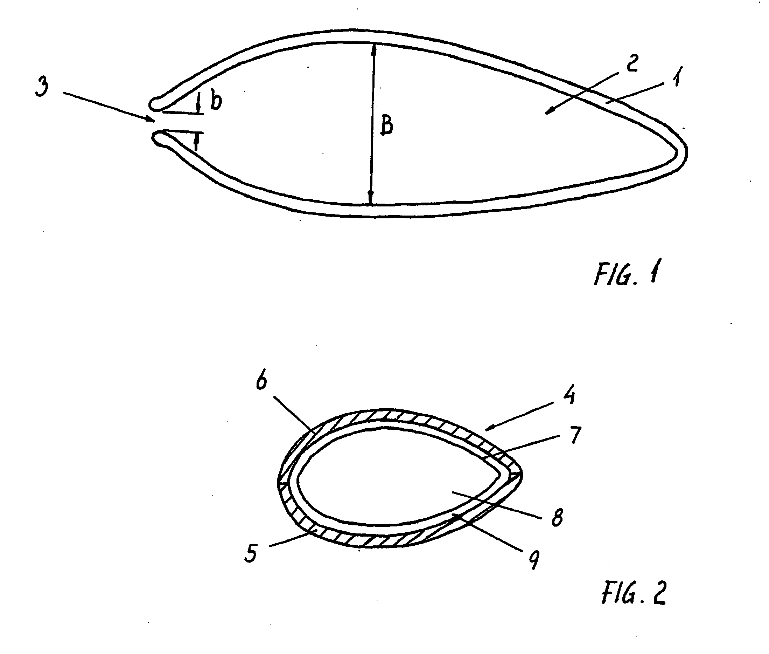

On Fig. 1 there is shown an item in a longitudinal section which e.g. may be produced by the method according to the invention. The item consists of a shell 1 constituted by a composite material, such as glass or carbon fibre reinforced epoxy, polyester or thermoplastic. Inside the shell there is a cavity 2, and the shell has an opening 3 into the cavity. The opening has a width b which is smaller than a width B of the cavity in the shell. The opening in the item shown is thus smaller than the internal dimensions of the cavity why such an item cannot be moulded in one piece with an internal mandrel or core unless the mandrel or core stays in the item after finishing. By the method according to the invention the item can be made in one piece as explained further with reference to Fig. 2.

Fig. 2 shows a crosswise section of a mould, which e.g. can be used for producing the item shown in Fig. 1. The mould shown in Fig. 2 comprises an outer mould 4 consisting of a first outer mould part 5 and a further outer mould part 6 together with a moulding core consisting of an outer part 7 containing a filling material 8. Between the outer mould 4 and the outer part 6 of the moulding core a interspace 9 is formed, determining the shape of the shell of the finished item. The shape of the finished item produced in a mould shown in Fig. 2 will be a bit different from the shell shown in Fig. 1 constituting a finished item. The shell will always, however, be produced with an opening, either during moulding or after curing by creating access from the outer side of the shell and into the cavity in the shell.

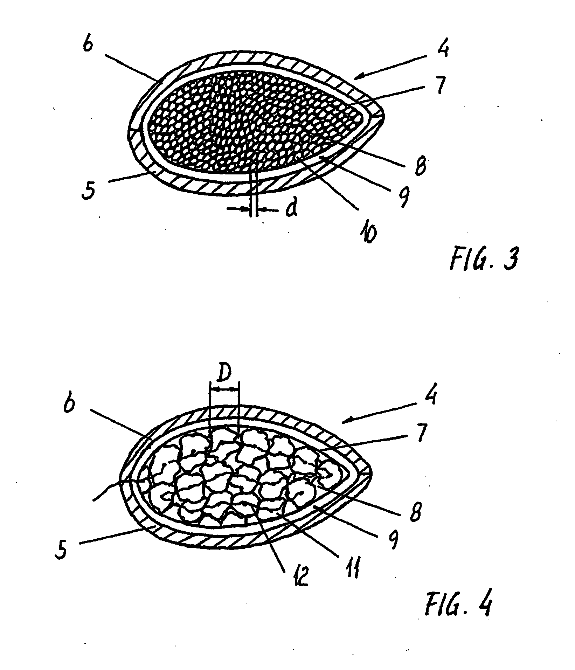

Fig. 3, which is not part of the invention as claimed, shows a section crosswise of a mould containing a first type of mould filling material. The mould shown in Fig. 3 also comprises an outer mould 4 consisting of a first outer mould part 5 and a further outer mould part 6 together with a moulding core consisting of an outer part 7 containing the filling material 8. The filling material 8 consists of granulate 10 of a material suited for producing a shell corresponding to the one shown in Fig. 1. The filling material 8 has a diameter d, which is less than the width b of an opening in the shell desired to be made (see e.g. Fig. 1). Thereby it is possible immediately to get the filling material 8 out of the shell when this has been made, e.g. by sucking the filling material out through the opening. Between the outer mould 4 and the outer part 6 of the moulding core a interspace 9 is formed, determining the shape of the shell of the finished item.

Fig. 4 shows a crosswise section of a mould containing another type of mould filling material. The mould shown in Fig. 4 also comprises an outer mould 4 consisting of a first outer mould part 5 and a further outer mould part 6 together with a moulding core consisting of an outer part 7 containing the filling material 8. Between the outer mould 4 and the outer part 6 of the moulding core a interspace 9 is formed, determining the shape of the shell of the finished item. The filling material 8 consists of larger parts 11 of a material suited for producing a shell corresponding to the one shown in Fig. 1. The filling material 8 is produced of a deformable material such as a compressible material and has a diameter D, which is greater than the width b of an opening in the shell desired to be produced (see e.g. Fig. 1). Thereby it is impossible to get the filling material 8 out of the shell immediately when this has been made.

The single parts 11 of the filling material 8 are individually connected by a string, a rope, a wire 12 or the like. When the filling material 8 should be out of the shell, it is possible to pull in e.g. the string 12 and in this way get the single parts 11 of the filling material 8 out by simultaneous deformation and/or compression of the filling material, when this passes through the opening in the shell (see Fig. 1). In the shown embodiment, the string 12 extends out through the moulding parts 5,6. Alternatively, the string 12 may be kept inside the cavity during moulding and only subsequently be passed out through the opening being formed in the shell.

The making of the shell constituting the finished item is normally made in the following way. Firstly, fibre material is laid in the first (the lowest) outer mould part 5 in the required number of layers, which fibre material may be mats or roving. The fibre material may possibly be pre-impregnated with moulding material, such as polyester or epoxy, which is in a not completely cured condition. Normally, the fibre material will not be adapted in surface size to the first outer mould part, but will be greater so that the excess part hangs outside the mould. Matrix material is hereafter possibly placed upon the layers of fibre material.

The outer part 7 of the moulding core is then placed upon the fibre and possibly matrix material in the first outer mould part 5. This outer part is bag-shaped and made of a flexible material, such as for example plastic or rubber. The outer part 7 is filled with filling material so that it gets the desired shape. This filling material may be a material, which may be readily shaped material pieces of e.g. foam material.

As aid in placing the filling material so that the outer part 7 gets the desired shape, templates, for example, or the like defining the desired shape may be used, or the shape may be ascertained by means of measuring apparatus of different kinds.

When the outer part 7 of the moulding core has got the desired shape or approximately the desired shape, possible matrix material is placed at first upon the uppermost part of the moulding core. Then fibre material, possibly pre-impregnated, is placed on top again in that the fibre material used in the layers in the first outer mould part 5 and hanging outside of this, is now bent up and laid upon the moulding core.

When the desired layers of fibre material are laid upon the moulding core, the further outer mould part 6 is laid on top again, as this together with the first part 5 of the outer mould form a closed moulding shell. In the interspace 9 between the moulding core and the outer mould the fibre material now is placed, possibly in a pre-impregnated shape, and possibly matrix material.

Vacuum is now connected to the outer mould 4 whereby the outer part 7 of the moulding core, which is airtight, will expand inside the outer mould and press fibre material, matrix material etc. out against the inner side of the outer mould. Before connecting vacuum an airtight closure of the outer part 7 of the moulding core and of the outer mould 4 is established. If pre-impregnated fibre material is used, the moulding material with which it is impregnated will now flow outwards so that a compact laminate is formed and subsequently cured. If pre-impregnated fibre material is not used, moulding material is supplied to the interspace 9 via inlet openings (not shown on the drawing), so that the low pressure in the interspace ensures that fibre material and possible matrix material is impregnated.

Because of the outer part 7 of the moulding core is expanding, it is not necessary to give the moulding core the shape exactly desired when the filling material is arranged in the outer part. The outer part will under all circumstances, when vacuum is added to the outer mould, expand and thereby cause the outer part of the item to corresponding to the shape of the inner side of the outer mould. The bag-shaped outer part of the moulding core can therefore also be smaller than the desired shape if it only can expand sufficiently without breaking, as it also may be greater when only the excessive material then can be folded together around the filling material.

After curing the outer part 7 of the moulding core is emptied from filling material 8 through the opening or openings 3 present in the finished item. If the filling material is material pieces of e.g. foam material this may readily be taken out through the opening 3. When speaking of sufficiently big items, like e.g. wings for windmills, with a sufficiently large opening 3, a person may possibly even crawl into the moulding core and remove the filling material in a suitable way.

Also here, if the item is sufficiently big, you can let a person crawl into the moulding core through the opening to ease the taking out of the filling material of the moulding core. If the material is of a type that may be compressed, e.g. foam rubber with open cells, the material is compressed by evacuation, and thereby easily removable, e.g. by pulling the bags in which the material is placed out of the mould with a string after evacuation.

Finally, one can also remove the outer part 7 of the moulding core through the opening, if the outer part is to be reused, or if it is undesirable to let it stay inside the cavity. If the outer part is made of a suitably cheap material, such as for example plastic film one can let it stay in the item as well.

The described method can also be used for items in which there are more cavities. Only one moulding core corresponding to each cavity has to be used then. As an example one may imagine that in the example shown in Fig. 2 a further moulding core is placed upon the layers of fibre material and possible matrix material, which is laid upon the first moulding core, whereafter the further moulding core is formed by filling with filling material. Hereafter, further fibre material and possibly matrix material is laid on the presently free surfaces of the further moulding core, whereafter the further outer mould part 6 is placed on the top so that the outer mould is closed.

Furthermore, more than one further outer mould part of the may be used as the outer mould can be assembled from more than two outer mould parts. As the first outer mould part one will usually choose the one where it is best to start the laying of fibre material and where one may place the moulding cores in the best way under consideration of handling, accessibility and stability during production.

Furthermore, production of items may be performed without necessarily having a closed outer mould as fibre material etc. only may be laid around one or more moulding cores, possibly during use of a first outer mould part. By the method there may hereby be manufactured items with an internal shape corresponding to the moulding core or the moulding cores.

Finally, it is to be noted that the method of course may also be used to make items, which also can be produced by means of an extractable mandrel, i.e. items having at least one opening through which the mandrel or the core may be taken out.

## Claims

1. Method for producing items of composite material, for example fibre reinforced material such as glass fibre reinforced epoxy or polyester, which items constitute partly closed structures containing cavities (2), which method comprises:
a) that the reinforcement material such as fibre and/or matrix material, which optionally may be preimpregnated with moulding material, is placed around a mould core (7, 8) consisting of an outer part (7) of a flexible material and an extractable filling material (8, 10, 11) arranged inside the outer part (7),
b) that the reinforcement material is moulded with the moulding material,
c) that the composite material subsequently hardens or cures,
d) that the extractable filling material (8) of the mould core subsequently is taken out through at least one opening in the flexible outer part of the mould core and further taken out through at least one opening (3) in the item (1) produced,
e) that the filling material (8, 10, 11) of the mould core is mouldable and that the filling material (8, 10, 11) of the mould core or mould cores comprises a material consisting of parts (10, 11) being substantially smaller in relation to the extension of the moulding core
f) that the filling material is removed after hardening or curing of the composite material,
**characterised in**
- **that** a string (12) or the like is secured to the filling material, and the filling material is pulled out through the opening of the item produced by pulling the string,
and
- **that** the filling material comprises pieces (10), being constituted by an elastically deformable material (11), while the volume of the filling material is reduced to a cross section which is smaller than the opening (3) of the item (1) produced, when the filling material is pulled through the opening of the item produced.

2. Method according to claim 1, **characterized in that** the outer part (7) of the mould core, after the filling material (8, 10, 11) has been taken out, also is taken out through the opening (3) in the produced item (1).

3. Method according to claim 1 or 2, **characterized in that** the placement of the reinforcement around the mould core or the mould cores is effected in
a1) that a part of the reinforcement material is placed in a first outer mould part (5) constituting a part of a substantially closed outer mould part (4),
a2) that one or more mould cores (7, 8) subsequently are placed in the first outer mould (7, 8) part (5),
a3) - that further reinforcement material is placed around the mould core or mould cores, and
a4) that one or more further outer mould parts (6) are placed in connection with the first outer mould part (5) for forming the substantially closed outer mould (4).

4. Method according to claim 3, **characterized in that** after the placement of the mould core (7, 8) or the mould cores in the first outer mould part (5) and before the further reinforcement material is placed around the mould core or the mould cores then the accessible parts of the mould core or the mould cores are adapted to the desired shape, preferably by means of templates or the like, as the mouldable filling material (8, 10, 11) is rearranged inside the flexible outer part (7), e.g. by removing or adding filling material.

5. Method according to claim 3 or 4, **characterized in that** the substantially closed outer mould (4) has a connection for vacuum and has one or more inlet openings for liquid material, that the outer mould, when closed, is put under vacuum and simultaneously liquid material is added for impregnating the reinforcement material.

6. Method according to one or more of the preceding claims, **characterized in that** the outer part (7) of the mould core or mould cores are made of one of the materials: plastic, solid rubber, foamed material or similar elastically deformable material.

7. Method according to one or more of the preceding claims, **characterized in that** the filling material (8, 10, 11) of the mould core being foamed material, such as chips, balls or strips or the like.

## Patentansprüche

1. Verfahren zum Herstellen von Gegenständen aus Verbundwerkstoff, zum Beispiel aus faserverstärktem Material, wie etwa glasfaserverstärktem Epoxidharz oder Polyester, wobei diese Gegenstände teilweise geschlossene Strukturen bilden, die Hohlräume (2) enthalten, wobei das Verfahren umfasst:
a) dass das Verstärkungsmaterial, wie etwa Faser- und/oder Matrixmaterial, welches optional mit Formmasse vorimprägniert sein kann, um einen Formkern (7, 8) herum angeordnet wird, der aus einem äußeren Teil (7) aus einem flexiblen Material und einem extrahierbaren Füllmaterial (8, 10, 11), das innerhalb des äußeren Teils (7) angeordnet ist, besteht,
b) dass das Verstärkungsmaterial mit der Formmasse pressgeformt wird,
c) dass der Verbundwerkstoff anschließend härtet oder aushärtet,
d) dass das extrahierbare Füllmaterial (8) des Formkerns anschließend durch mindestens eine Öffnung in dem flexiblen äußeren Teil des Formkerns hindurch herausgenommen wird und ferner durch mindestens eine Öffnung (3) in dem hergestellten Gegenstand (1) hindurch herausgenommen wird,
e) dass das Füllmaterial (8, 10, 11) des Formkerns formbar ist und dass das Füllmaterial (8, 10, 11) des Formkerns oder der Formkerne ein Material umfasst, das aus Teilen (10, 11) besteht, die im Verhältnis zu der Erstreckung des Formkerns wesentlich kleiner sind,
f) dass das Füllmaterial nach dem Härten oder Aushärten des Verbundwerkstoffs entfernt wird,
**dadurch gekennzeichnet,**
- **dass** eine Schnur (12) oder Ähnliches an dem Füllmaterial befestigt wird und das Füllmaterial durch die Öffnung des hergestellten Gegenstands hindurch herausgezogen wird, indem an der Schnur gezogen wird,
und
- **dass** das Füllmaterial Stücke (10) umfasst, die von einem elastisch verformbaren Material (11) gebildet werden, wobei das Volumen des Füllmaterials auf einen Querschnitt verringert wird, der kleiner als die Öffnung (3) des hergestellten Gegenstands (1) ist, wenn das Füllmaterial durch die Öffnung des hergestellten Gegenstands hindurchgezogen wird.

2. Verfahren nach Anspruch 1, **dadurch gekennzeichnet, dass** der äußere Teil (7) des Formkerns, nachdem das Füllmaterial (8, 10, 11) herausgenommen worden ist, ebenfalls durch die Öffnung (3) in dem hergestellten Gegenstand (1) hindurch herausgenommen wird.

3. Verfahren nach Anspruch 1 oder 2, **dadurch gekennzeichnet, dass** das Anordnen der Verstärkung um den Formkern oder die Formkerne herum dadurch ausgeführt wird,
a1) dass ein Teil des Verstärkungsmaterials in einem ersten Außenform-Teil (5) angeordnet wird, der einen Teil einer im Wesentlichen geschlossenen Außenform (4) bildet,
a2) dass ein oder mehrere Formkerne (7, 8) anschließend in dem ersten Teil (5) der Außenform (7, 8) angeordnet werden,
a3) dass weiteres Verstärkungsmaterial um den Formkern oder die Formkerne herum angeordnet wird und
a4) dass ein oder mehrere weitere Außenform-Teile (6) in Verbindung mit dem ersten Außenform-Teil (5) angeordnet werden, um die im Wesentlichen geschlossene Außenform (4) zu bilden.

4. Verfahren nach Anspruch 3, **dadurch gekennzeichnet, dass** nach dem Anordnen des Formkerns (7, 8) oder der Formkerne in dem ersten Außenform-Teil (5), und bevor das weitere Verstärkungsmaterial um den Formkern oder die Formkerne herum angeordnet wird, die zugänglichen Teile des Formkerns oder der Formkerne an die gewünschte Gestalt angepasst werden, vorzugsweise mithilfe von Schablonen oder Ähnlichem, wobei das formbare Füllmaterial (8, 10, 11) innerhalb des flexiblen äußeren Teils (7) neu angeordnet wird, z. B. durch Entfernen oder Hinzufügen von Füllmaterial.

5. Verfahren nach Anspruch 3 oder 4, **dadurch gekennzeichnet, dass** die im Wesentlichen geschlossene Außenform (4) einen Anschluss für Vakuum aufweist und eine oder mehrere Einlassöffnungen für flüssiges Material aufweist, dass die Außenform, wenn sie geschlossen ist, unter Vakuum gesetzt wird und gleichzeitig flüssiges Material zum Imprägnieren des Verstärkungsmaterials zugeführt wird.

6. Verfahren nach einem oder mehreren der vorhergehenden Ansprüche, **dadurch gekennzeichnet, dass** der äußere Teil (7) des Formkerns oder der Formkerne aus einem der folgenden Materialien hergestellt ist: Kunststoff, Massivgummi, Schaumstoff oder ähnliches elastisch verformbares Material.

7. Verfahren nach einem oder mehreren der vorhergehenden Ansprüche, **dadurch gekennzeichnet, dass** das Füllmaterial (8, 10, 11) des Formkerns Schaumstoff ist, wie dünne Scheiben, Kugeln oder Streifen oder Ähnliches.

## Revendications

1. Procédé de production d'articles en matériau composite, par exemple un matériau armé de fibres tel qu'un époxy ou un polyester armé de fibres de verre, lesquels articles constituent des structures partiellement fermées contenant des cavités (2), lequel procédé comprend :
a) que le matériau d'armature tel qu'un matériau fibreux et/ou matriciel, qui peut être facultativement pré-imprégné avec un matériau de moulage, est placé autour d'un noyau (7, 8) de moule consistant en une partie externe (7) d'un matériau flexible et un matériau de remplissage (8, 10, 11) extractible agencé à l'intérieur de la partie externe (7),
b) que le matériau d'armature est moulé avec le matériau de moulage,
c) que le matériau composite durcit ou sèche ensuite,
d) que le matériau de remplissage (8) extractible du noyau de moule est ensuite extrait à travers au moins une ouverture dans la partie externe flexible du noyau de moule et en outre extrait à travers au moins une ouverture (3) dans l'article (1) produit,
e) que le matériau de remplissage (8, 10, 11) du noyau de moule peut se mouler et que le matériau de remplissage (8, 10, 11) du noyau de moule ou des noyaux de moule comprend un matériau consistant en parties (10, 11) étant sensiblement plus petites par rapport à l'extension du noyau de moulage
f) que le matériau de remplissage est extrait après durcissement ou séchage du matériau composite, **caractérisé en ce**
- **qu'**une ficelle (12) ou similaire est fixée au matériau de remplissage, et que le matériau de remplissage est tiré par l'ouverture de l'article produit en tirant la ficelle, et
- **que** le matériau de remplissage comprend des pièces (10), étant constituées par un matériau (11) élastiquement déformable, tandis que le volume du matériau de remplissage est réduit à une section transversale qui est plus petite que l'ouverture (3) de l'article (1) produit, lorsque le matériau de remplissage est tiré à travers l'ouverture de l'article produit.

2. Procédé selon la revendication 1, **caractérisé en ce que** la partie externe (7) du noyau de moule, après que le matériau de remplissage (8, 10, 11) a été sorti, est également sortie à travers l'ouverture (3) dans l'article (1) produit.

3. Procédé selon la revendication 1 ou 2, **caractérisé en ce que**
la mise en place du renfort autour du noyau de moule ou des noyaux de moule est effectuée en ce
a1) qu'une partie du matériau d'armature est placée dans une première partie (5) de moule externe constituant une partie d'une partie (4) de moule externe sensiblement fermée,
a2) qu'un ou plusieurs noyau(x) (7, 8) de moule est/sont ensuite placé(s) dans la première partie (5) de moule externe (7, 8),
a3) qu'un autre matériau d'armature est placé autour du noyau de moule ou des noyaux de moule, et
a4) qu'une ou plusieurs autre(s) partie(s) (6) de moule externe est/sont placée(s) en connexion avec la première partie (5) de moule externe pour former le moule externe (4) sensiblement fermé.

4. Procédé selon la revendication 3, **caractérisé en ce qu'**après la mise en place du noyau (7, 8) de moule ou des noyaux de moule dans la première partie (5) de moule externe et avant que l'autre matériau d'armature ne soit placé autour du noyau de moule ou des noyaux de moule, alors les parties accessibles du noyau de moule ou des noyaux de moule sont adaptées à la forme désirée, préférablement au moyen de gabarits ou similaire, alors que le matériau de remplissage (8, 10, 11) moulable est réagencé à l'intérieur de la partie externe (7) flexible, par exemple en enlevant ou en ajoutant du matériau de remplissage.

5. Procédé selon la revendication 3 ou 4, **caractérisé en ce que** le moule externe (4) sensiblement fermé a une connexion de dépression et a une ou plusieurs ouverture(s) d'entrée pour un matériau liquide, que le moule externe, lorsqu'il est fermé, est mis sous vide et simultanément un matériau liquide est ajouté pour imprégner le matériau d'armature.

6. Procédé selon une ou plusieurs des revendications précédentes, **caractérisé en ce que** la partie externe (7) du noyau de moule ou des noyaux de moule est constituée d'un des matériaux : plastique, caoutchouc plein, matériau expansé, ou matériau similaire élastiquement déformable.

7. Procédé selon une ou plusieurs des revendications précédentes, **caractérisé en ce que** le matériau de remplissage (8, 10, 11) du noyau de moule étant un matériau expansé, tel que des copeaux, des billes ou des bandes ou similaire.
